# EUROPEAN PATENT APPLICATION

(11) **EP 0 747 209 A1**
(43) Date of publication of application: **11.12.1996**
(21) Application number: 96201511.1
(22) Date of filing: 29.05.1996
(51) Int. Cl.: B32B 7/12, B32B 5/32, B32B 31/00, C09J 5/06

(54) **A method for bonding two layers by using an adhesive-absorbing intermediate layer**

(30) Priority: 29.05.1995 NL 1000446
(71) Applicant: Speciaal Machine Bouw Breda B.V., 5081 NR Hilvarenbeek (NL)
(72) Inventor: Van Stratum, Theodorus Antonius Petrus, 5084 HJ Biest-Houtakker (NL); Van Stratum, Theodorus Jozef Gabriel Cornelis, 5084 HJ Biest-Houtakker (NL)
(74) Representative: Fieret, Johannes, Ir.

(57) **Abstract**

A method for bonding a first layer (1) of material and a second layer (2) of material together by using an adhesive. At least the first layer of material is an adhesive-absorbing layer. The adhesive (4) is applied to either one of two main surfaces of an adhesive-absorbing intermediate layer (3) and penetrates into the intermediate layer in order to wet the opposite main surface as well. Alternatively the adhesive is applied to opposite main surfaces of an intermediate layer. The layers of material are bonded together with the interposition of the intermediate layer thus provided with the adhesive. The adhesive may be a glue, the intermediate layer may be a layer of glass fibre, the first layer of material may be a layer of rock wool or glass wool and the second layer of material may be a steel or aluminium sheet.

## Description

The invention relates to a method for bonding a first layer of material and a second layer of material together by using an adhesive, wherein at least said first layer of material is an adhesive-absorbing layer.

According to the prior art the layers of material are generally bonded together by applying an adhesive to either one of the two layers of material and subsequently joining said layers of material or pressing them together.

When an adhesive is applied to an adhesive-absorbing layer of material, said layer of material will absorb adhesive and said adhesive will penetrate into said layer of material. This has inter alia the following consequences.

More adhesive must be used than is in principle necessary for obtaining a predetermined adhesive power.

The necessary use of an excessive amount of adhesive may have an adverse effect on the fire-resisting and thermal properties of the aggregate consisting of the layers of material bonded together by cured adhesive, compared with a combination which only consists of said layers of material.

If it is necessary to use an excessive amount of adhesive, the production process used for bonding the layers of material will take more time.

The above problems will occur in particular in those cases where the nature of the production process makes it necessary for the adhesive to be applied to the adhesive-absorbing layer of material.

A typical example of a production process as referred to above is a (dis)continuous production process for bonding a layer of mineral insulating material to a metal sheet by means of a glue.

The object of the invention is to provide a solution for the above-described problems and in order to accomplish that objective it provides a method of the kind referred to in the preamble, which is in accordance with a first aspect characterized in that said adhesive is applied to a main surface of an adhesive-absorbing intermediate layer, that said adhesive is allowed to penetrate into said intermediate layer, and that said layers of material are bonded together with the interposition of the intermediate layer, which is wetted with said adhesive on its main surface and on its opposite main surface, and which is in accordance with a second aspect characterized in that said adhesive is applied to opposite main surfaces of an intermediate layer, and that said layers of material are bonded together with the interposition of said intermediate layer, which is provided with said adhesive on its opposite main surfaces.

Both the first aspect of the invention and the second aspect of the invention will result in an optimum bond between the layers of material to be bonded together, whilst the consumption of adhesive will be minimal, partly due to the fact that a better distribution of the adhesive is obtained than is the case when said adhesive is applied directly to the adhesive-absorbing layer of material.

More particularly, the advantages of using the invention will be an improved bond, because the invention utilizes the flow of the adhesive on the intermediate layer before the layers of material and the intermediate layer are brought into contact with each other, whereby the adhesive is simultaneously brought into contact with the layers of material to be bonded together, whilst furthermore a saving on the amount of adhesive being used may be realized.

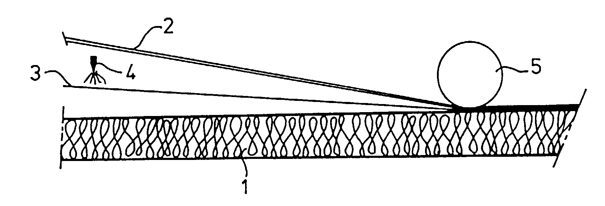

The invention will be described in more detail hereafter with reference to a drawing consisting of a single Figure, which shows a schematic and highly simplified embodiment of the method according to the invention. More particularly, the drawing illustrates the typical example referred to in the introduction of bonding a layer of mineral insulating material to a metal sheet of for example steel or aluminium by means of a glue in a (dis)continuous production process.

The invention is not restricted to the aforesaid possible use, but generally relates to a method for bonding a first layer of material and a second layer of material together by using an adhesive, wherein at least said first layer of material is adhesive-absorbing, and wherein the adhesive is in accordance with the invention applied to a main surface of an adhesive-absorbing intermediate layer, said adhesive is allowed to penetrate into said intermediate layer, and said layers of material are bonded together with the interposition of the intermediate layer, which is wetted with said adhesive on its said main surface and on its opposite main surface, or wherein said layers of material are bonded together with the interposition of said intermediate layer, which is provided with said adhesive on its opposite main surfaces.

The drawing illustrates the former possibility, with numeral 1 indicating the first, adhesive-absorbing layer of material, which may be a layer of mineral material, such as a layer of rock wool or glass wool, numeral 2 indicating a second layer of material, which may be a layer of metal, such as a steel or aluminium sheet, and numeral 3 indicating an adhesive-absorbing intermediate layer of for example glass fibre. The adhesive may be a glue, such as polyurethane (for example epoxy). The application of adhesive is schematically represented by a spray gun 4, whilst a roller 5 schematically represents a press-on system. It is noted that it is not necessary to use a press-on system. The bonding together per se may take place in a conventional manner. What is new is the use of an intermediate layer 3. Alternatively the adhesive may be applied to the opposite main surface or to both main surfaces of intermediate layer 3. In the latter case the intermediate layer 3 may also consist of paper.

Referring again to the drawing, an adhesive is in accordance with the method according to the invention applied to the adhesive-absorbing intermediate layer or porous carrier 3 by being sprayed or poured thereon, for example. One property of said porous carrier 3 is the fact that it does not react chemically with the adhesive to be used. When the adhesive, for example a glue, is applied to one side of carrier 3, carrier 3 furthermore possesses the property of allowing the glue to penetrate sufficiently far into carrier 3, so that the degree of wetting achieved on the opposite side of carrier 3 is comparable or identical to that achieved on the side to which the glue is applied.

It is to be preferred for the viscosity of the adhesive to be so low that the adhesive spreads over the carrier 3 before coming into contact with the surfaces of layers of material 1 and 2 that are to be glued together.

In a possible production process the adhesive-absorbing intermediate layer 3 with the adhesive applied thereto is brought into contact, via a press-on system 5, with the layers of material 1 and 2 to be bonded together, and is kept under a predetermined pressure and at a predetermined temperature during a predetermined period of time, until the adhesive has sufficiently cured.

Depending on the production process the carrier 3 should be capable of being unwound and possess such a strength that it can be pulled taut over a predetermined distance of for example 2500 mm without any risk of breaking.

When the joint construction consisting of the bonded-together layers of material 1 and 2 and the sandwiched intermediate layer 3 comprising the adhesive is intended to have a particular degree of fire-resistance, the composition of carrier 3 must be such that the fire-resistance of the joint construction is not affected by the carrier as such.

The joint construction may be a building panel having a width of 1200 mm and a thickness of 30 - 150 mm, for example.

When the adhesive is alternatively applied to both sides of the intermediate layer 3, said intermediate layer 3 is preferably not really adhesive-absorbing, but for the rest all that which has been said with regard to the adhesive and the intermediate layer 3 also applies in this case.

## Claims

1. A method for bonding a first layer of material and a second layer of material together by using an adhesive, wherein at least said first layer of material is an adhesive-absorbing layer, characterized in that said adhesive is applied to a main surface of an adhesive-absorbing intermediate layer, that said adhesive is allowed to penetrate into said intermediate layer, and that said layers of material are bonded together with the interposition of the intermediate layer, which is wetted with said adhesive on its main surface and on its opposite main surface.

2. A method for bonding a first layer of material and a second layer of material together by using an adhesive, wherein at least said first layer of material is an adhesive-absorbing layer, characterized in that said adhesive is applied to opposite main surfaces of an intermediate layer, and that said layers of material are bonded together with the interposition of said intermediate layer, which is provided with said adhesive on its opposite main surfaces.

3. A method according to claim 1 or 2, characterized in that said adhesive is applied to said intermediate layer by being sprayed or poured thereon.

4. A method according to any one of the preceding claims, characterized in that said bonding takes place by using pressure and heat.

5. A method according to any one of the preceding claims, characterized in that said adhesive has a low viscosity.

6. A method according to any one of the preceding claims, characterized in that said adhesive and said intermediate layer do not react chemically.

7. A method according to any one of the preceding claims, characterized in that said adhesive is a glue, such as polyurethane glue.

8. A method according to any one of the preceding claims, characterized in that said intermediate layer is fire-resistant.

9. A method according to any one of the preceding claims, characterized in that said intermediate layer is capable of being unwound and being pulled taut without breaking.

10. A method according to any one of the preceding claims, characterized in that said intermediate layer is a layer of glass fibre.

11. A method according to any one of the preceding claims, characterized in that said first layer of material is a layer of mineral material, such as a layer of rock wool or glass wool.

12. A method according to any one of the preceding claims, characterized in that said second layer of material is a metal sheet, such as a steel or aluminium sheet.
